# EUROPÄISCHE PATENTSCHRIFT

(11) **EP 3 680 797 B1**
(45) Veröffentlichungstag und Bekanntmachung des Hinweises auf die Patenterteilung: **27.10.2021**
(21) Anmeldenummer: 19151564.2
(22) Anmeldetag: 14.01.2019
(51) Int. Cl.: G06F 21/44, G06F 21/81, G06F 21/85

(54) **MANIPULATIONSGESCHÜTZTES DATENVERARBEITUNGSGERÄT**
TAMPER-PROOF DATA PROCESSING APPARATUS
APPAREIL DE TRAITEMENT DES DONNÉES PROTÉGÉ CONTRE LA MANIPULATION

(43) Veröffentlichungstag der Anmeldung: 15.07.2020
(73) Patentinhaber: MUSE Electronics GmbH, 1090 Wien (AT)
(72) Erfinder: ZACH, Gerald, 2120 Obersdorf (AT); LECHNER, Philipp, 1090 Wien (AT)
(74) Vertreter: Weiser & Voith Patentanwälte Partnerschaft

(56) Entgegenhaltungen:
- WO-A1-2012/161505
- WO-A1-2013/144416
- US-A1- 2015 186 684
- US-B1- 6 351 817

## Beschreibung

Die vorliegende Erfindung betrifft ein Datenverarbeitungsgerät, mit einem Gehäuse, in dem ein Prozessor, ein an den Prozessor angeschlossener Programmspeicher und zumindest eine an den Prozessor über eine Datenleitung angeschlossene und über eine Stromversorgungsleitung stromversorgte Hardwarekomponente angeordnet sind.

Die US 2015/0186684 A1 beschreibt eine Stromversorgung für ein Datenverarbeitungsgerät. Die Stromversorgung hat einen Empfänger zum Anschließen eines elektronischen Tags mit einem Autorisierungscode. Der Empfänger vergleicht den vom Tag empfangenen Autorisierungscode mit einem vorgegebenen Code und schaltet im Verifizierungsfall die Stromversorgung über einen Transistorschalter an das Gerät an.

Für sicherheitskritische Anwendungen, insbesondere im behördlichen und industriellen Bereich, ist der Schutz von Datenverarbeitungsgeräten gegenüber Manipulationen und Hacker-Angriffen von strategischer Bedeutung. Enormer Aufwand wird getrieben, um Geräte mittels physischer Zugangsbarrieren und Software-Firewalls entsprechend abzusichern. Besonders der Schutz von mobilen Datenverarbeitungsgeräten im Feld mit Standardbetriebssystemen und -applikationen ist aufgrund des leichten physischen Zugangs zu diesen Geräten, deren meist offener Schnittstellen und der weiten Verbreitung von Schadsoftware für solche Geräte ein großes Problem.

Die Erfindung setzt sich zum Ziel, ein Datenverarbeitungsgerät der eingangs genannten Art mit verbesserter Sicherheit zu schaffen, insbesondere für den mobilen Einsatz im Feld.

Dieses Ziel wird mit einem Datenverarbeitungsgerät der einleitend genannten Art erreicht, welches sich auszeichnet durch
einen im Gehäuse angeordneten Mikrokontroller mit einer Schnittstelle und einem persistenten Schlüsselspeicher, in dem der Public Key eines ersten Public/Private-Key-Schlüsselpaares hinterlegt ist,
wobei in die Datenleitung der genannten zumindest einen Hardwarekomponente ein vom Mikrokontroller gesteuerter Schalter zwischengeschaltet ist, und
wobei der Mikrokontroller dafür ausgebildet ist, eine mit dem Private Key des ersten Schlüsselpaares erzeugte Signatur eines an die Schnittstelle lösbar angeschlossenen Speichermoduls über die Schnittstelle zu empfangen, anhand des Public Key des ersten Schlüsselpaares zu verifizieren und im Verifizierungsfall den Schalter einzuschalten.

Die Erfindung schafft ein völlig neuartiges Sicherheitskonzept für ein Datenverarbeitungsgerät. Das Sicherheitskonzept besteht aus einer Kombination von geräteinternen Schaltern für die An- und Abschaltung von Hardwarekomponenten und einer Softwareauthentifizierung eines extern anschließbaren Speichermoduls, welches gleichsam als "Schlüssel" für die ordnungsgemäße Inbetriebnahme des Geräts dient. Dazu ist ein eigener Mikrokontroller im Gehäuse angeordnet, der als "Security Gateway" für die Inbetriebnahme der Hardwarekomponenten wirkt, indem er die Authentifizierung des externen Speichermoduls abwickelt und davon abhängig die Hardwareschalter bedient. Da ein Betrieb des Datenverarbeitungsgeräts ohne ein entsprechend authentifiziertes Speichermodul nicht möglich ist, ist die Gefahr von Manipulationen des Datenverarbeitungsgeräts reduziert.

Unter dem Begriff "Speichermodul" wird in der vorliegenden Offenbarung jede Art von Hardwarekomponente verstanden, welche befähigt ist, die genannte Signatur über die Schnittstelle an das Datenverarbeitungsgerät zu senden. Das Speichermodul kann dabei entweder die genannte Signatur bereits vorberechnet enthalten oder nur den genannten Private Key, um daraus bei Bedarf die Signatur zu erzeugen. Beispielsweise ist das Speichermodul - insbesondere im ersten Fall - ein bloßer Speicher wie eine Halbleiterspeicherkarte, ein Speicherstick oder -chip, ein RFID- oder NFC-Tag od.dgl., oder - insbesondere im zweiten Fall - auch mit eigener Rechenleistung ausgestattet, z.B. eine SIM-Karte, ein kryptographischer Dongle, ein Smartphone od.dgl.

Die solcherart geschaltete(n) Hardwarekomponente(n) des Datenverarbeitungsgeräts können beliebiger Art sein. Beispiele sind ein drahtgebundenes oder drahtloses Schnittstellenmodul, z.B. eine USB-Schnittstelle, eine Speicherkartenschnittstelle, eine Funkschnittstelle wie ein WiFi^{®}-, Bluetooth^{®}- oder Mobilfunknetz-Modul, eine Ein- und/oder Ausgabeeinheit wie eine Tastatur, ein Bildschirm oder Touchscreen, eine Kamera oder auch jede andere Art von Umweltsensor. Eine der geschalteten Hardwarekomponenten kann insbesondere auch ein persistenter, d.h. nicht-flüchtiger, Massenspeicher sein, z.B. eine Magnetfestplatte oder eine optische Platte, im Gegensatz zum Programmspeicher des Prozessors, der bevorzugt ein flüchtiger Speicher ist. Ohne ein vom Mikrokontroller authentifiziertes Speichermodul verfügt das Datenverarbeitungsgerät somit über keinen Massenspeicher mit darin gespeicherten Betriebssystem- und Applikationsprogrammen, d.h. ist gleichsam "leer". Erst durch Anschließen des richtigen Speichermoduls werden die entsprechenden Hardwarekomponenten, z.B. der persistente Massenspeicher mit den Programmen und die notwendigen Schnittstellen, Kameras, Sensoren usw., verfügbar und das Gerat einsatzfähig. Je nach angeschlossenem Speichermodul können dabei auch verschiedene Hardwarekomponenten freigeschaltet werden.

Zusätzlich zu dem die Datenleitung der jeweiligen Hardwarekomponente schaltenden Schalter kann in die Stromversorgungsleitung der jeweiligen Hardwarekomponente ein vom Mikrokontroller gesteuerter weiterer Schalter zwischengeschaltet und der Mikrokontroller dafür ausgebildet sein, im Verifizierungsfall auch diesen weiteren Schalter einzuschalten, um die Sicherheit zu erhöhen.

In einer besonders bevorzugten Ausführungsform der Erfindung kann der Mikrokontroller dafür ausgebildet sein, im Verifizierungsfall ein Programm und/oder Daten aus dem Speichermodul über die Schnittstelle zu laden. Das Datenverarbeitungsgerät kann so beispielsweise ohne jeglichen persistenten Massenspeicher distribuiert werden. Die für den Betrieb erforderlichen Systemprogramme, Applikationen und Daten können auf dem zertifizierten Speichermodul an die Benutzer verteilt werden; erst bei Anschließen des jeweiligen gegenüber dem Datenverarbeitungsgerät authentifizierten Speichermoduls wird das Datenverarbeitungsgerät mit den Programmen und Daten geladen und kann in Betrieb genommen werden.

Bevorzugt wird dabei in dem Schlüsselspeicher der Private Key eines zweiten Public/Private-Key-Schlüsselpaares hinterlegt und der Mikrokontroller ist dafür ausgebildet, ein mit dem Public Key des zweiten Schlüsselpaares verschlüsseltes Programm oder derart verschlüsselte Daten über die Schnittstelle zu laden, mit dem Private Key des zweiten Schlüsselpaares zu entschlüsseln und dem Prozessor zwecks Speicherung im Programmspeicher oder der Hardwarekomponente zuzuführen. Die Datenübertragung des Programms vom Speichermodul in das Datenverarbeitungsgerät erfolgt so verschlüsselt und immun gegenüber Abhörangriffen an der Schnittstelle.

Der Schlüsselspeicher, in dem der Public Key des externen Speichermoduls hinterlegt ist, kann beispielsweise direkt im Mikrokontroller oder einem daran angeschlossenen Speicher beheimatet sein. Alternativ kann der Schlüsselspeicher auch in einem Trusted-Platform-Modul (TPM) liegen, das an den Mikrokontroller angeschlossen ist. Ein solches TPM kann in einer weiteren vorteilhaften Ausgestaltung der Erfindung dazu verwendet werden, darin den Public Key eines Public/Private-Key-Master-Schlüsselpaares zu hinterlegen, wobei dann der Mikrokontroller dafür ausgebildet ist, einen mit dem Private Key des Master-Schlüsselpaares signierten Public Key über die Schnittstelle zu empfangen, dessen Signatur anhand des Public Key des Master-Schlüsselpaares zu verifizieren und im Verifizierungsfall den empfangenen Public Key im Schlüsselspeicher zu hinterlegen. Ein Administrator, der über den Private Key des Master-Schlüsselpaares verfügt, kann so beispielsweise mit einem an die Schnittstelle angeschlossenen Administratorterminal anwendungs- bzw. missionsspezifische Public Keys hinterlegen und das Datenverarbeitungsgerät damit für Nutzer mit entsprechend anwendungs- bzw. missionsspezifisch authorisierten Speichermodulen vorbereiten.

Die Schnittstelle, welche zum Anschluss des externen Speichermoduls bzw. des optionalen Administratorterminals dient, kann sowohl drahtgebunden als auch drahtlos sein, z.B. eine Kurzreichweiten-Funkschnittstelle nach einem RFID (radio frequency identification), WLAN (wireless local area network), NFC (near field communication) oder Bluetooth^{®}-Standard. Bevorzugt ist die Schnittstelle drahtgebunden und insbesondere bevorzugt eine USB-Schnittstelle, um physische Zuordnungssicherheit zu gewährleisten.

Gemäß einem weiteren bevorzugten Merkmal der Erfindung ist das Gehäuse mit einem an den Mikrokontroller angeschlossenen Manipulationssensor ausgestattet und der Mikrokontroller dafür ausgebildet, bei Ansprechen des Manipulationssensors den bzw. die Schalter auszuschalten. Ein solcher Manipulationssensor kann beispielsweise die Integrität des Gehäuses überwachen und auf ein Öffnen oder Beschädigen des Gehäuses ansprechen, um dann eine oder mehrere Hardwarekomponenten zu deaktivieren. Dabei kann der Mikrokontroller bei Ansprechen des Manipulationssensors bevorzugt auch den Schlüsselspeicher löschen, um jedwede weitere Inbetriebnahme selbst bei neuerlichem Anschließen des Speichermoduls zu verhindern.

Alternativ oder zusätzlich kann das Datenverarbeitungsgerät mit einem an den Mikrokontroller angeschlossenen Stromausfalldetektor ausgestattet und der Mikrokontroller dafür ausgebildet sein, bei Ansprechen des Stromausfalldetektors den Schlüsselspeicher zu löschen. Der weitere Betrieb des Geräts kann so auch bei einer Manipulation an der Stromversorgung unterbunden werden. In der Ausführungsform mit Trusted-Platform-Modul kann der Mikrokontroller ferner überdies bei Ansprechen des Stromausfalldetektors den Public Key des Master-Schlüsselpaares im Trusted-Platform-Modul löschen. Ohne Master-Public-Key können keine speichermodulspezifischen Public Keys mehr hinterlegt werden, sodass das Gerät nach der Detektion eines Stromausfalls dauerhaft unbrauchbar gemacht ist.

Die Erfindung wird nachstehend anhand von in den beigeschlossenen Zeichnungen dargestellten Ausführungsbeispielen näher erläutert. In den Zeichnungen zeigt:
Fig. 1 ein Blockschaltbild des Datenverarbeitungsgeräts der Erfindung in Verbindung mit einem Speichermodul und einem Administratorterminal; und
Fig. 2 einen Detailausschnitt des Schaltbilds von Fig. 1.

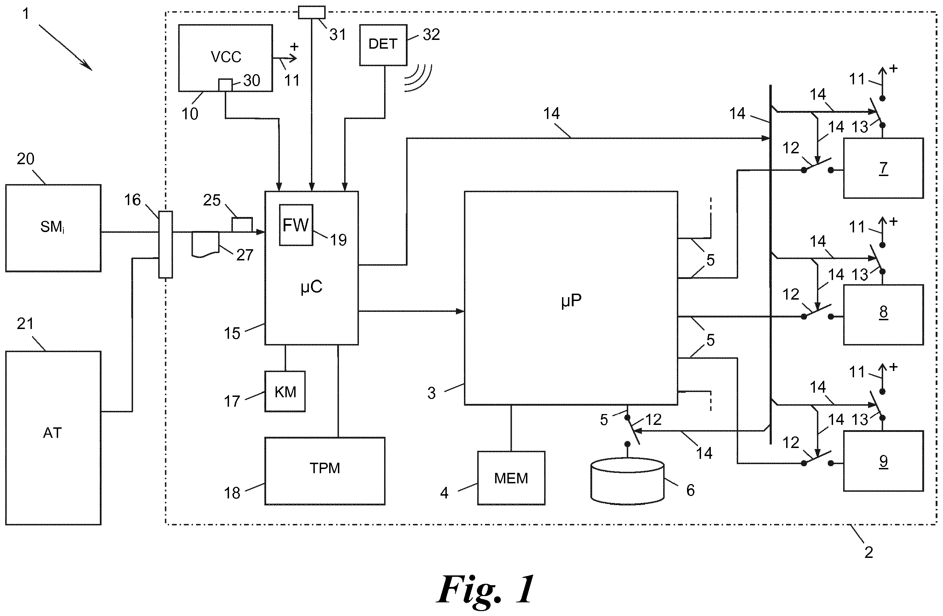

Gemäß Fig. 1 umfasst ein Datenverarbeitungsgerät 1 ein (hier nur schematisch dargestelltes) Gehäuse 2 zur sicheren und geschützten Aufnahme der darin angeordneten Komponenten. Das Datenverarbeitungsgerät 1 ist beispielsweise ein Desktop-, Laptop-, Notebook-, Handheld- oder Tablet-Computer oder ein Smartphone. Das Gehäuse 2 ist hochstabil und bevorzugt so abgesichert, dass ein Zugang zu den Komponenten des Datenverarbeitungsgeräts 1 im Inneren des Gehäuses größtmöglich erschwert ist. Das Gehäuse 2 kann spritzwassergeschützt oder wasserdicht sein, ein- und abstrahlungsgeschützt, hitze-, stoß- und aufprallgeschützt, schuss- und explosionssicher usw.

In dem Gehäuse 2 sind - auf einer oder mehreren Platinen mit entsprechenden Verbindungsleitungen - ein Prozessor 3 mit einem daran angeschlossenen flüchtigen Programmspeicher 4 sowie eine oder mehrere an den Prozessor 3 über Datenleitungen 5 angeschlossene Hardwarekomponenten 6 - 9 angeordnet. Alle Komponenten des Datenverarbeitungsgeräts 1 werden von einer gehäuseinternen oder gehäuseexternen Stromversorgung 10 stromversorgt, so auch die Hardwarekomponenten 6 - 9 über beispielhafte Stromversorgungsleitungen 11.

Jede der (hier beispielhaft: vier) Hardwarekomponenten 6 - 9 kann insbesondere sein:
- ein persistenter, d.h. nicht-flüchtiger, Massenspeicher, z.B. eine magnetische Festplatte, eine optische Speicherplatte, ein Flash-Speicher, ein ROM, PROM, EPROM, EEPROM usw.;
- ein kabelgebundenes Schnittstellenmodul, z.B. eine USB-, Firewire^{®}- oder HDMI-Schnittstelle oder eine SpeicherkartenSchnittstelle, z.B. für SD-Speicherkarten;
- ein Funkschnittstellenmodul, z.B. ein WiFi^{®}-, Bluetooth^{®}-, NFC- oder RFID-Modul oder ein Mobilfunknetzmodul nach einem 2G-, 3G-, 4G- oder 5G-Standard wie GSM, UMTS, LTE, 5G od.dgl.;
- eine Kamera oder ein beliebiger anderer Umweltsensor, z.B. ein Temperatur-, Schall- oder Lichtsensor für Temperatur, Licht und Schall innerhalb und/oder außerhalb des Gehäuses 2;
- ein chemischer Sensor, Luftgütesensor, Sensor zur Erkennung von Radioaktivität, Entfernungsmesser, Multimeter, Datenlogger od.dgl;
- eine Ein- und/oder Ausgabeeinheit wie eine Tastatur, ein Bildschirm, ein Touchscreen od.dgl.;
- ein Satellitennavigationsempfänger, z.B. ein GPS-, Galileo- oder Glonass-Empfänger;
- ein Lage- bzw. Beschleunigungsmessgerät oder eine IMU (Inertial Measurement Unit);
- ein Audiomodul für Ton- oder Sprachein- und -ausgabe.

In die Datenleitungen 5 der Hardwarekomponenten 6 - 9 ist jeweils ein steuerbarer Schalter 12 zwischengeschaltet. Ebenso ist in jede der Stromversorgungsleitungen 11 der Hardwarekomponenten 6 - 9 jeweils ein steuerbarer Schalter 13 zwischengeschaltet. Die Schalter 12, 13 sind über Steuerleitungen 14 von einem Mikrokontroller 15 im Gehäuse 2 gesteuert.

Der Mikrokontroller 15 hat eine Schnittstelle 16 aus dem Gehäuse 2 nach außen. Die Schnittstelle 16 kann sowohl drahtgebunden als auch drahtlos sein, beispielsweise ist sie eine USB-Schnittstelle, eine Kurzreichweiten-Funkschnittstelle nach einem RFID-, WLAN-, NFC- oder Bluetooth^{®}-Standard, od.dgl. Die Schnittstelle 16 könnte jedoch auch durch eine als Schnittstellenmodul ausgeführte Hardwarekomponente 6 - 9 gebildet sein, falls gewünscht.

An den Mikrokontroller 15 sind ein persistenter Schlüsselspeicher 17 und ein Trusted-Platform-Modul 18 angeschlossen, deren Funktion später noch ausführlicher erläutert wird. Der Schlüsselspeicher 17 könnte auch direkt im Mikrokontroller 15 beheimatet sein, ebenso das Trusted-Platform-Modul 18, bzw. könnte umgekehrt betrachtet der Mikrokontroller 15 durch ein Prozessorelement im Trusted-Platform-Modul 18 gebildet sein.

Der Mikrokontroller 15 ist mit einer Firmware 19 programmiert, die in einem persistenten Speicherbereich im Inneren des Mikrokontrollers 15, im Schlüsselspeicher 17 und/oder im Trusted-Platform-Modul 18 gespeichert ist und den Mikrokontroller 15 die im Weiteren beschriebenen Funktionen ausführen lässt.

An die Schnittstelle 16 ist ein Speichermodul 20 lösbar angeschlossen. Über die Schnittstelle 16 kann alternativ oder zusätzlich auch ein Administratorterminal 21 zur Konfiguration insbesondere des Mikrokontrollers 15, des Schlüsselspeichers 17 und/oder des Trusted-Platform-Moduls 18 angeschlossen werden.

Das Speichermodul 20 ist beispielsweise ein "reiner" Speicher wie eine Halbleiterspeicherkarte, z.B. ein USB-Speicherstick, eine SD-Speicherkarte, ein RFID- oder NFC-Tag od.dgl., oder es ist auch mit eigener Rechenleistung ausgestattet, d.h. hat zusätzlich zu seinem Speicher auch einen eigenen Prozessor, wie beispielsweise eine SIM-Karte, ein kryptographischer Dongle, ein Smartphone, ein PDA (Personal Digital Assistant), ein "Wearable" wie ein digitales Armband, eine Smart-Watch oder allgemein jede Art von digitalem Device, das am oder sogar im Körper des Benutzers getragen werden kann.

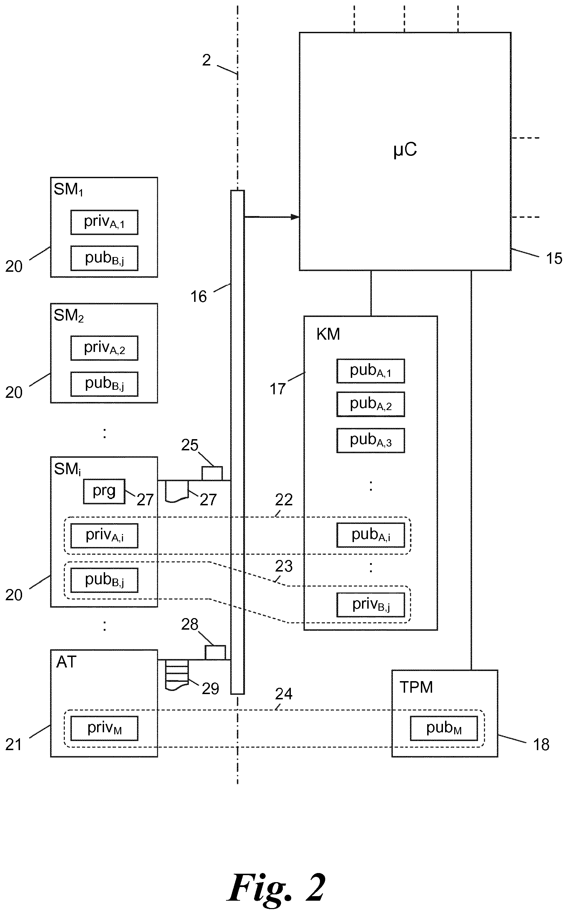

Fig. 2 zeigt die Einspeicherung verschiedenster Schlüsselpaare 22 - 24 in den oben beschriebenen Komponenten. Jedes Schlüsselpaar 22 - 24 besteht aus einem privaten Schlüssel ("Private Key") priv und einem öffentlichen Schlüssel ("Public Key") pub. Wie in der Technik bekannt, können Daten eines Kommunikationsteilnehmers A, die dieser mit seinem Private Key priv_{A} signiert hat, von einem anderen Teilnehmer B durch Nachrechnen der Signatur mit Hilfe des Public Key pub_{A} des Teilnehmers A authentifiziert, d.h. auf tatsächliche Signierung mit dem Private Key priv_{A}, überprüft werden; und wenn der Teilnehmer A Daten mit dem Public Key pub_{B} des Teilnehmers B verschlüsselt hat, können diese verschlüsselten Daten vom Teilnehmer B mit dessen Private Key priv_{B} entschlüsselt werden.

Mit einem solchen Public/Private-Key-Verschlüsselungsverfahren können verschiedenste Speichermodule 20 aus einem Satz von Speichermodulen SM₁, SM₂, ..., allgemein SM₁, gegenüber dem Datenverarbeitungsgerät 2 authentifiziert werden. Zunächst, wird - beispielsweise bei der Herstellung, Initialisierung und/oder Verteilung des Datenverarbeitungsgeräts 1 an einen Benutzer im Feld - der Public Key pub_{A,i} des Speichermoduls SMᵢ im Schlüsselspeicher 17 des Mikrokontroller 15 hinterlegt. Das Speichermodul SMᵢ selbst enthält den zugehörigen Private Key priv_{A,i}; der Public Key pub_{A},ᵢ und der Private Key priv_{A,i} bilden ein erstes Schlüsselpaar 22.

Der Mikrokontroller 15 ist damit in der Lage, bei Anschließen des Speichermoduls 20 bzw. SMᵢ dieses zu authentifizieren, d.h. seine Berechtigung für den Betrieb des Datenverarbeitungsgeräts 1 zu überprüfen. Dazu empfängt der Mikrokontroller 19 über die Schnittstelle 16 eine mit dem Private Key pri-v_{A,i} vom Speichermodul SMᵢ erzeugte Signatur 25 des Speichermoduls SMᵢ und verifiziert sie mit dem im Schlüsselspeicher 17 gespeicherten Public Key pub_{A,i}. Im Verifizierungsfall, d.h. bei erfolgreicher Verifizierung, schaltet der Mikrokontroller 15 die Schalter 12, 13 ein, schlägt die Verifizierung fehl, schaltet er die Schalter 12, 13 aus.

Es versteht sich, dass eine Hardwarekomponente 6 - 9 nicht notwendigerweise über beide Schalter 12, 13 verfügen muss. Beispielsweise könnte nur ihre Datenleitung 5 über einen Schalter 12 geschaltet sein, oder nur ihre Stromversorgungsleitung 11 über einen Schalter 13. Wenn eine Hardwarekomponente 6 - 9 sowohl über einen Datenschalter 12 als auch über einen Stromschalter 13 verfügt, werden in der Regel - wenn auch nicht zwingend - beide Schalter 12, 13 gemeinsam ein- oder ausgeschaltet.

Einem bestimmten Speichermodul SMᵢ kann eine bestimmte Untergruppe aller verfügbaren Hardwarekomponenten 6 - 9 zugeordnet sein, die vom Mikrokontroller 15 im Verifizierungsfall eingeschaltet wird. Die Auswahl der jeweils einzuschaltenden Hardwarekomponenten 6 - 9 kann dann durch entsprechende Identifikation jenes Public Key pub_{A},ᵢ erfolgen, dessen Verifizierung erfolgreich war, und dem z.B. im Schlüsselspeicher 17 eine Liste von Hardwarekomponenten 6 - 9 zugeordnet ist. Alternativ könnte das Speichermodul SMᵢ mit der Signatur 25 auch eine Liste der einzuschaltenden Hardwarekomponenten 6 - 9 senden.

Optional kontrolliert der Mikrokontroller 15 laufend das Vorhandensein des angeschlossenen Speichermoduls 20 bzw. detektiert die Schnittstelle 16 ein Abziehen oder einen Ausfall des Speichermoduls 20, um die zuvor eingeschalteten Hardwarekomponenten 6 - 9 umgehend auszuschalten.

In einem oder mehreren der Speichermodule SMᵢ können optional Programme oder Daten 27, beispielsweise das Betriebssystem des Datenverarbeitungsgeräts 1, Betriebsdaten und/oder Applikationen, gespeichert sein. Der Mikrokontroller 15 kann dann im Verifizierungsfall das Programm bzw. die Daten 27 aus dem Speichermodul 20 über die Schnittstelle 16 laden und dem Prozessor 3 zuführen, beispielsweise zwecks Speicherung im Programmspeicher 4 oder einer Hardwarekomponente 6 - 9, z.B. dem Massenspeicher 6.

Bei Übertragung des Programms bzw. der Daten 27 über die Schnittstelle 16 kann dieses mithilfe eines zweiten Public/Private-Key-Schlüsselpaares 23 aus einem Public Key pub_{B,j} und einem Private Key priv_{B,j} verschlüsselt werden. Dazu ist der Private Key priv_{B,j} des zweiten Schlüsselpaares 23 im Schlüsselspeicher 17 des Mikrokontrollers 15 hinterlegt und der Public Key pub_{B}.ⱼ des zweiten Schlüsselpaares 23 im Speichermodul 20. Das Speichermodul 20 kann nun das Programm bzw. die Daten 27 mit dem Public Key pub_{B,j} des Datenverarbeitungsgeräts 1 verschlüsseln und über die Schnittstelle 16 senden, und der Mikrokontroller 15 kann das verschlüsselte Programm bzw. die derart verschlüsselten Daten 27 mit dem im Schlüsselspeicher 17 gespeicherten Private Key priv_{B,j} entschlüsseln.

Erforderlichenfalls können auch mehrere verschiedene zweite Schlüsselpaare 23 verwendet werden, d.h. im Schlüsselspeicher 17 entsprechend mehrere Private Keys priv_{B,i}, priv_{B,2}, ..., priv_{B,j} gespeichert werden, um unterschiedliche, mit dem jeweils zugehörigen Public Key pub_{B,j}, pub_{B,j} ..., pub_{B,j} verschlüsselte Programme bzw. Daten 27 zu entschlüsseln.

Optional kann der Satz von im Schlüsselspeicher 17 gespeicherten Public Keys pub_{A,i}, pub_{A,2}, ..., pub_{A,i}, welche jeweils einem anschließbaren Speichermodul SM₁, SM₂, ..., SMᵢ zugeordnet sind, modifiziert werden, beispielsweise um das Datenverarbeitungsgerät 1 zur Verwendung mit unterschiedlichen Speichermodulen 20 mit jeweils unterschiedlichen Programmen 27 für unterschiedliche Missionen zu authorisieren. Zu diesem Zweck ist optional in einem besonders geschützten Teil des Geräts 1, insbesondere dem Trusted-Platform-Modul 18, der Public Key pub_{M} eines Master-Schlüsselpaares 24 hinterlegt. Der zugehörige Private Key priv_{M} des Master-Schlüsselpaares 24 ist in einem Administratorterminal 21 gespeichert. Wenn das Administratorterminal 21 an die Schnittstelle 16 angeschlossen wird, kann der Mikrokontroller 15 eine mit dem Private Key priv_{M} des Administratorterminals 21 erzeugte Signatur 28 des Administratorterminals 21 empfangen und diese mithilfe des im Trusted-Platform-Modul 18 gespeicherten Public Key pub_{M} des Master-Schlüsselpaares 24 verifizieren. Im Verifizierungsfall gestattet der Mikrokontroller 15, dass eine Liste 29 mit einem oder mehreren neuen bzw. aktualisierten Public Keys pub_{A},ᵢ vom Administratorterminal 21 her empfangen und im Schlüsselspeicher 17 gespeichert wird, anstelle oder zusätzlich zu den bereits dort vorhandenen Public Keys pub_{A,i}. Das Datenverarbeitungsgerät 1 kann so mithilfe des Administratorterminals 21 zur Verwendung mit verschiedensten, auch nur temporär gültigen Speichermodulen 20 konfiguriert werden.

Auf dieselbe Weise können im übrigen auch der oder die im Schlüsselspeicher 17 gespeicherten Private Key(s) priv_{B,1}, priv_{B,2}, ..., priv_{B,j} modifiziert werden.

Als weitere Sicherheitsmaßnahme gegenüber Betriebsstörungen oder Manipulationen des Datenverarbeitungsgeräts 1 kann die Stromversorgung 10 mit einem Stromausfallsdetektor 30 versehen sein, welcher den Mikrokontroller 15 bei einem Ausfall oder einer Störung der Stromversorgung 10 dazu ansteuert, den Schlüsselspeicher 17 zu löschen. Dadurch gibt es keine im Schlüsselspeicher 17 mehr hinterlegten Public Keys pub_{A},ᵢ zur Authentifizierung von angeschlossenen Speichermodulen 20. Optional kann der Mikrokontroller 15 bei Ansprechen des Stromausfalldetektors 30 auch den Public Key pub_{M} des Master-Schlüsselpaares 24 im Trusted-Platform-Modul 18 löschen, wodurch das Datenverarbeitungsgerät 1 nicht mehr mithilfe des Administratorterminals 21 über die Schnittstelle 16 konfigurierbar und damit unbrauchbar gemacht ist. Zusätzlich könnte auch ein Teil oder das gesamte Programm im Mikrokontroller 15 gelöscht werden.

Eine gleichartige "Notlöschfunktion" für den Schlüsselspeicher 17 und/oder das Trusted-Platform-Modul 18 kann auch mithilfe eines vom Benutzer betätigbaren Schalters 31 bewirkt werden, der von der Außenseite des Gehäuses 2 her zugänglich ist.

Als zusätzliche Sicherheitsmaßnahme kann das Gehäuse 2 mit einem Manipulationssensor 32 ausgestattet sein. Der Manipulationssensor 32 detektiert Manipulationen am bzw. im Gehäuse 2, z.B. ein Öffnen, Beschädigen, Erschüttern, Überhitzen, Unterkühlen, Bestrahlen oder Beschallen usw., und veranlasst dann den Mikrokontroller 15 dazu, die Schalter 12, 13 auszuschalten und/oder die vorgenannte Notlöschfunktion auszulösen. Ein solcher Manipulationssensor 32 kann beispielsweise sein:
- ein Schaltkontakt, der beim Öffnen des Gehäuses 2 schließt oder öffnet und dieses Ansprechen dem Mikrokontroller 15 signalisiert;
- ein Widerstandsmessgerät, welches den elektrischen Widerstand der Gehäusewandung des Gehäuses 2 überwacht, beispielsweise zwischen Elektroden, die über die Wandung des Gehäuses 2 verteilt sind, oder in einem Gitter aus leitfähiger Tinte, Drähten usw., um Sprünge oder Risse in Gehäuse 2 anhand von Widerstandsenderungen zu detektieren;
- ein Mikrophon für den Innenraum des Gehäuses 2, welches strukturelle Änderungen im Gehäuse 2 anhand einer Veränderung des Schallübertragungs- oder -reflexionsverhaltens des Gehäuseinneren detektiert;
- eine Festkörperschall-Überwachungseinrichtung, welche solche strukturelle Änderungen anhand des Schallübertragungs- oder -resonanzverhaltens der Festkörperstruktur des Gehäuses 2 und seiner darin montierten Komponenten für darin eingeleitete Schall- oder Ultraschallwellen detektiert;
- andere Arten von Licht- oder Schalldetektoren im oder am Gehäuse 2, die z.B. ein Öffnen des Gehäuses 2 aufgrund von Eindringen von Licht oder Schall in das Gehäuse 2 detektieren;
- Kameras, die in das Innere des Gehäuses oder nach außen gerichtet sind, um Manipulationen am oder im Gehäuse 2 zu detektieren; usw. usf.

Der Mikrokontroller 15 kann dabei so programmiert sein, dass er bei einem Ansprechen des Manipulationssensors 32 den Schlüsselspeicher 17 und/oder das Trusted-Platform-Modul 18 löscht, um eine Weiterverwendung eines manipulierten Datenverarbeitungsgeräts 1 zu unterbinden bzw. dieses überhaupt unbrauchbar zu machen.

Die Erfindung ist nicht auf die dargestellten Ausführungsformen beschränkt, sondern umfasst alle Varianten, Modifikationen und deren Kombinationen, die in den Rahmen der angeschlossenen Ansprüche fallen.

## Patentansprüche

1. Datenverarbeitungsgerät, mit einem Gehäuse (2), in dem ein Prozessor (3), ein an den Prozessor (3) angeschlossener Programmspeicher (4) und zumindest eine an den Prozessor (3) über eine Datenleitung (5) angeschlossene und über eine Stromversorgungsleitung (11) stromversorgte Hardwarekomponente (6 - 9) angeordnet sind, **gekennzeichnet durch**
einen im Gehäuse (2) angeordneten Mikrokontroller (15) mit einer Schnittstelle (16) und einem persistenten Schlüsselspeicher (17), in dem der Public Key (pub_{A,i}) eines ersten Public/Private-Key-Schlüsselpaares (22) hinterlegt ist,
wobei in die Datenleitung (5) ein vom Mikrokontroller (15) gesteuerter Schalter (12) zwischengeschaltet ist, und
wobei der Mikrokontroller (15) dafür ausgebildet ist, eine mit dem Private Key (priv_{A,i}) des ersten Schlüsselpaares (22) erzeugte Signatur (25) eines an die Schnittstelle (16) lösbar angeschlossenen Speichermoduls (20) über die Schnittstelle (16) zu empfangen, anhand des Public Key (pub_{A,i}) des ersten Schlüsselpaares (22) zu verifizieren und im Verifizierungsfall den Schalter (12) einzuschalten.

2. Datenverarbeitungsgerät nach Anspruch 1, **dadurch gekennzeichnet, dass** in die Stromversorgungsleitung (11) ein vom Mikrokontroller (15) gesteuerter weiterer Schalter (13) zwischengeschaltet ist, wobei der Mikrokontroller (15) ferner dafür ausgebildet ist, im Verifizierungsfall auch den weiteren Schalter (13) einzuschalten.

3. Datenverarbeitungsgerät nach Anspruch 1 oder 2, **dadurch gekennzeichnet, dass** der Mikrokontroller (15) dafür ausgebildet ist, im Verifizierungsfall ein Programm (27) aus dem Speichermodul (20) über die Schnittstelle (16) zu laden.

4. Datenverarbeitungsgerät nach Anspruch 3, **dadurch gekennzeichnet, dass** in dem Schlüsselspeicher (17) der Private Key (priv_{B,j}) eines zweiten Public/Private-Key-Schlüsselpaares (23) hinterlegt und der Mikrokontroller (15) dafür ausgebildet ist, ein mit dem Public Key (pub_{B,j}) des zweiten Schlüsselpaares (23) verschlüsseltes Programm oder derart verschlüsselte Daten (27) über die Schnittstelle (16) zu laden, mit dem Private Key (priv_{B,j}) des zweiten Schlüsselpaares (23) zu entschlüsseln und dem Prozessor (3) zwecks Speicherung im Programmspeicher (4) oder der Hardwarekomponente (6 - 9) zuzuführen.

5. Datenverarbeitungsgerät nach einem der Ansprüche 1 bis 4, **dadurch gekennzeichnet, dass** in einem Trusted-Platform-Modul (18) des Mikrokontrollers (15) der Public Key (pub_{M}) eines Public/Private-Key-Master-Schlüsselpaares (24) hinterlegt ist,
wobei der Mikrokontroller (15) dafür ausgebildet ist, einen mit dem Private Key (priv_{M}) des Master-Schlüsselpaares (24) signierten Public Key (pub_{A,i}) über die Schnittstelle (16) zu empfangen, dessen Signatur (25) anhand des Public Key (pub_{M}) des Master-Schlüsselpaares (24) zu verifizieren und im Verifizierungsfall den empfangenen Public Key (pub_{A,i}) im Schlüsselspeicher (17) zu hinterlegen.

6. Datenverarbeitungsgerät nach einem der Ansprüche 1 bis 5, **dadurch gekennzeichnet, dass** die bzw. zumindest eine der Hardwarekomponente/n (6 - 9) ein persistenter Massenspeicher ist.

7. Datenverarbeitungsgerät nach einem der Ansprüche 1 bis 5, **dadurch gekennzeichnet, dass** die bzw. zumindest eine der Hardwarekomponente/n (6 - 9) ein Funkschnittstellenmodul ist.

8. Datenverarbeitungsgerät nach einem der Ansprüche 1 bis 5, **dadurch gekennzeichnet, dass** die bzw. zumindest eine der Hardwarekomponente/n (6 - 9) eine Kamera oder ein Umweltsensor ist.

9. Datenverarbeitungsgerät nach einem der Ansprüche 1 bis 8, **dadurch gekennzeichnet, dass** die Schnittstelle eine drahtgebundene Schnittstelle (16) ist.

10. Datenverarbeitungsgerät nach Anspruch 9, **dadurch gekennzeichnet, dass** die Schnittstelle eine USB-Schnittstelle ist.

11. Datenverarbeitungsgerät nach einem der Ansprüche 1 bis 10, **dadurch gekennzeichnet, dass** das Gehäuse (2) mit einem an den Mikrokontroller (15) angeschlossenen Manipulationssensor (32) ausgestattet und der Mikrokontroller (15) dafür ausgebildet ist, bei Ansprechen des Manipulationssensors (32) den Schalter (12) auszuschalten.

12. Datenverarbeitungsgerät nach einem der Ansprüche 2 bis 11, **dadurch gekennzeichnet, dass** das Gehäuse (2) mit einem an den Mikrokontroller (15) angeschlossenen Manipulationssensor (32) ausgestattet und der Mikrokontroller (15) dafür ausgebildet ist, bei Ansprechen des Manipulationssensors (32) den weiteren Schalter (13) auszuschalten.

13. Datenverarbeitungsgerät nach Anspruch 11 oder 12, **dadurch gekennzeichnet, dass** der Mikrokontroller (15) ferner dafür ausgebildet ist, bei Ansprechen des Manipulationssensors (32) den Schlüsselspeicher (15) zu löschen.

14. Datenverarbeitungsgerät nach einem der Ansprüche 1 bis 13, **dadurch gekennzeichnet, dass** es mit einem an den Mikrokontroller (15) angeschlossenen Stromausfalldetektor (30) ausgestattet und der Mikrokontroller (15) dafür ausgebildet ist, bei Ansprechen des Stromausfalldetektors (30) den Schlüsselspeicher (15) zu löschen.

15. Datenverarbeitungsgerät nach den Ansprüchen 5 und 14, **dadurch gekennzeichnet, dass** der Mikrokontroller (15) ferner dafür ausgebildet ist, bei Ansprechen des Stromausfalldetektors (30) den Public Key (pub_{M}) des Master-Schlüsselpaares (24) im Trusted-Platform-Modul (18) zu löschen.

## Claims

1. Data processing device with a housing (2) in which a processor (3), a program memory (14) connected to the processor (3) and at least one hardware component (6 - 9) connected to the processor (3) via a data line (5) and power-supplied via a power supply line (11) are arranged, **characterised by**
a microcontroller (15) arranged in the housing (2) with an interface (16) and a persistent key memory (17) in which the public key (pub_{A,i}) of a first public/private key pair (22) is stored,
wherein a switch (12) controlled by the microcontroller (15) is interposed in the data line (5), and
wherein the microcontroller (15) is configured to receive, via the interface (16), a signature (25) of a memory module (20) removably connected to the interface (16), the signature (25) being generated with the private key (priv_{A,i}) of the first key pair (22), to verify the signature (25) by means of the public key (pub_{A,i}) of the first key pair (22) and to switch on the switch (12) in case of verification.

2. Data processing device according to claim 1, **characterised in that** a further switch (13) controlled by the microcontroller (15) is interposed in the power supply line (11), wherein the microcontroller (15) is further configured to also switch on the further switch (13) in case of verification.

3. Data processing device according to claim 1 or 2, **characterised in that** the microcontroller (15) is configured to load a program (27) from the memory module (20) via the interface (16) in case of verification.

4. Data processing device according to claim 3, **characterised in that** the private key (priv_{B,j}) of a second public/private key pair (23) is stored in the key memory (17) and the microcontroller (15) is configured to load, via the interface (16), a program encrypted with the public key (pub_{B,j}) of the second key pair (23) or data (27) encrypted this way, to decrypt the same with the private key (priv_{B,j}) of the second key pair (23), and to feed the same to the processor (3) for storing in the program memory (4) or the hardware component (6 - 9).

5. Data processing device according to any one of claims 1 to 4, **characterised in that** the public key (pub_{M}) of a public/private master key pair (24) is stored in a trusted platform module (18) of the microcontroller (15),
wherein the microcontroller (15) is configured to receive, via the interface (16), a public key (pub_{A,i}) signed with the private key (priv_{M}) of the master key pair (24), to verify its signature (25) by means of the public key (pub_{M}) of the master key pair (24), and to store the received public key (pub_{A,i}) in the key memory (17) in case of verification.

6. Data processing device according to any one of claims 1 to 5, **characterised in that** the or at least one of the hardware component/s (6 - 9), respectively, is a persistent mass storage.

7. Data processing device according to any one of claims 1 to 5, **characterised in that** the or at least one of the hardware component/s (6 - 9), respectively, is a wireless interface module.

8. Data processing device according to any one of claims 1 to 5, **characterised in that** the or at least one of the hardware component/s (6 - 9), respectively, is a camera or an environment sensor.

9. Data processing device according to any one of claims 1 to 8, **characterised in that** the interface is a wired interface (16).

10. Data processing device according to claim 9, **characterised in that** the interface is a USB interface.

11. Data processing device according to any one of claims 1 to 10, **characterised in that** the housing (2) is equipped with a manipulation sensor (32) connected to the microcontroller (15) and the microcontroller (15) is configured to switch off the switch (12) upon triggering of the manipulation sensor (32) .

12. Data processing device according to any one of claims 2 to 11, **characterised in that** the housing (2) is equipped with a manipulation sensor (32) connected to the microcontroller (15) and the microcontroller (15) is configured to switch off the further switch (13) upon triggering of the manipulation sensor (32).

13. Data processing device according to claim 11 or 12, **characterised in that** the microcontroller (15) is further configured to erase the key memory (17) upon triggering of the manipulation sensor (32).

14. Data processing device according to any one of claims 1 to 13, **characterised in that** it is equipped with a power outage detector (30) connected to the microcontroller (15) and the microcontroller (15) is configured to erase the key memory (17) upon triggering of the power outage detector (30).

15. Data processing device according to claims 5 and 14, **characterised in that** the microcontroller (15) is further configured to erase the public key (pub_{M}) of the master key pair (30) in the trusted platform module (18) upon triggering of the power outage detector (30).

## Revendications

1. Appareil de traitement de données muni d'un boitier (2) dans lequel sont disposés un processeur (3), une mémoire de programme (4) raccordée au processeur (3), et au moins un composant matériel (6 - 9) raccordé au processeur (3) par le biais d'une ligne de données (5) et alimenté en électricité par le biais d'une ligne d'alimentation électrique (11), **caractérisé par**
un microcontrôleur (15) disposé dans le boitier (2) et muni d'une interface (16) et d'une mémoire de clé (17) non volatile dans laquelle est stockée la clé publique (pub_{A,i}) d'une première paire de clés publique/privée (22),
dans lequel un commutateur (12) commandé par le microcontrôleur (15) est interconnecté dans la ligne de données (5), et
dans lequel le microcontrôleur (15) est conçu pour recevoir, par le biais de l'interface (16), une signature (25) d'un module de mémoire (20) raccordé de manière amovible à l'interface (16), la signature (25) étant générée avec la clé privée (priv_{A,i}) de la première paire de clés (22), pour vérifier la signature (25) à l'aide de la clé publique (pub_{A,i}) de la première paire de clés (22) et pour mettre en marche le commutateur (12) dans le cas de la vérification.

2. Appareil de traitement de données selon la revendication 1, **caractérisé en ce qu'**un autre commutateur (13) commandé par le microcontrôleur (15) est interconnecté dans la ligne d'alimentation électrique (11), où le microcontrôleur (15) est en outre conçu pour aussi mettre en marche l'autre commutateur (13) dans le cas de la vérification.

3. Appareil de traitement de données selon la revendication 1 ou 2, **caractérisé en ce que** le microcontrôleur (15) est conçu pour charger un programme (27) à partir du module de mémoire (20) par le biais de l'interface (16) dans le cas de la vérification.

4. Appareil de traitement de données selon la revendication 3, **caractérisé en ce que** la clé privée (priv_{B,j}) d'une deuxième paire de clés publique/privée (23) est stockée dans la mémoire de clé (17) et le microcontrôleur (15) est conçu pour charger, par le biais de l'interface (16), un programme chiffré avec la clé publique (pub_{B,j}) de la deuxième paire de clés (23) ou des données (27) chiffrées de telle manière, pour déchiffrer le program ou les données (27) avec la clé privée (priv_{B,j}) de la deuxième paire de clés (23) et pour rajouter celui-ci ou celles-ci au processeur (3) en vue d'un stockage dans la mémoire de programme (4) ou dans le composant matériel (6 à 9).

5. Appareil de traitement de données selon l'une des revendications 1 à 4, **caractérisé en ce que** la clé publique (pub_{M}) d'une paire de clés maître publique/privée (24) est stockée dans un module de plateforme sécurisée TPM (18) du microcontrôleur (15),
dans lequel le microcontrôleur (15) est conçu pour recevoir une clé publique (pub_{A,i}) signée avec la clé privée (priv_{M}) de la paire de clés maître (24) par le biais de l'interface (16), pour vérifier sa signature (25) à l'aide de la clé publique (pub_{M}) de la paire de clés maître (24), et pour stocker la clé publique (pub_{A,i}) reçue dans la mémoire de clés (17) dans le cas de la vérification.

6. Appareil de traitement de données selon l'une des revendications 1 à 5, **caractérisé en ce que** l'un ou l'au moins un des composant/s matériel/s (6 - 9), respectivement, est une mémoire de masse non volatile.

7. Appareil de traitement de données selon l'une des revendications 1 à 5, **caractérisé en ce que** l'un ou l'au moins un des composant/s matériel/s (6 - 9), respectivement, est un module d'interface radio.

8. Appareil de traitement de données selon l'une des revendications 1 à 5, **caractérisé en ce que** l'un ou l'au moins un des composant/s matériel/s (6 - 9), respectivement, est une caméra ou un capteur environnemental.

9. Appareil de traitement de données selon l'une des revendications 1 à 8, **caractérisé en ce que** l'interface est une interface filaire (16).

10. Appareil de traitement de données selon la revendication 9, **caractérisé en ce que** l'interface est une interface USB.

11. Appareil de traitement de données selon l'une des revendications 1 à 10, **caractérisé en ce que** le boitier (2) est équipé d'un capteur de manipulation (32) raccordé au microcontrôleur (15) et le microcontrôleur (15) est conçu pour couper le commutateur (12) lors de le déclenchement du capteur de manipulation (32).

12. Appareil de traitement de données selon l'une des revendications 2 à 11, **caractérisé en ce que** le boitier (2) est équipé d'un capteur de manipulation (32) raccordé sur le microcontrôleur (15) et le microcontrôleur (15) est conçu pour couper l'autre commutateur (13) lors de le déclenchement du capteur de manipulation (32).

13. Appareil de traitement de données selon la revendication 11 ou 12, **caractérisé en ce que** le microcontrôleur (15) est en outre conçu pour effacer la mémoire de clés (17) lors de le déclenchement du capteur de manipulation (32).

14. Appareil de traitement de données selon l'une des revendications 1 à 13, **caractérisé en ce qu'**il est équipé d'un détecteur de coupure de courant (30) raccordé au microcontrôleur (15) et le microcontrôleur (15) est conçu pour effacer la mémoire de clés (17) lors de le déclenchement du détecteur de coupure de courant (30).

15. Appareil de traitement de données selon les revendications 5 et 14, **caractérisé en ce que** le microcontrôleur (15) est en outre conçu pour effacer la clé publique (pub_{M}) de la paire de clés maitre (24) dans le module de plateforme sécurisée (18) lors de le déclenchement du détecteur de coupure de courant (30).
